# EUROPEAN PATENT SPECIFICATION

(11) **EP 4 261 180 B1**
(45) Date of publication and mention of the grant of the patent: **26.02.2025**
(21) Application number: 22209796.6
(22) Date of filing: 28.11.2022
(51) Int. Cl.: B66F 9/075, B60K 1/04, B60L 53/80, B60L 50/60, B66F 9/22, H01M 50/249, H01M 10/052, H01M 50/244

(54) **REACH TRUCK WITH STRUCTURE FOR LITHIUM BATTERY**
SCHUBMASTSTAPLER MIT EINER STRUKTUR FÜR EINE LITHIUMBATTERIE
CHARIOT ÉLÉVATEUR AVEC STRUCTURE POUR BATTERIE AU LITHIUM

(30) Priority: 11.04.2022 CN 202210370919
(43) Date of publication of application: 18.10.2023
(73) Proprietor: Hangcha Group Co., Ltd., Hangzhou, Zhejiang 311305 (CN)
(72) Inventor: JIANG, Zongping, Hangzhou, 311305 (CN); YU, Fengbo, Hangzhou, 311305 (CN); MAO, Yexin, Hangzhou, 311305 (CN); WANG, Xuquan, Hangzhou, 311305 (CN); RUAN, Jingxuan, Hangzhou, 311305 (CN); HU, Juyun, Hangzhou, 311305 (CN); LI, Changhao, Hangzhou, 311305 (CN); WANG, Zhenyu, Hangzhou, 311305 (CN); SHI, Ze, Hangzhou, 311305 (CN)
(74) Representative: Ström & Gulliksson AB

(56) References cited:
- CN-U- 211 496 821
- CN-U- 215 626 569
- DE-A1- 102018 101 529
- US-A1- 2019 225 469
- US-B2- 11 165 116

## Description

### FIELD

The present application relates to the technical field of industrial trucks, and in particular to a reach truck with a structure for lithium battery.

### BACKGROUND

Most of the existing lithium battery reach trucks are powered by lead-acid batteries, which are mainly divided into two parts from top to bottom. The upper part is mainly equipped with main components such as multi-way valve, controller assembly and cover, and the lower part is lead-acid battery. The lead-acid battery has two functions for the vehicle: first, as a power source to provide electricity; second, because the lead-acid battery is heavy, it serves as the counterweight of the whole vehicle to prevent the vehicle from tipping over. Although the reach truck with lithium battery is gradually emerging, even for the model of lithium battery, the lead-acid battery is only replaced with lithium battery.

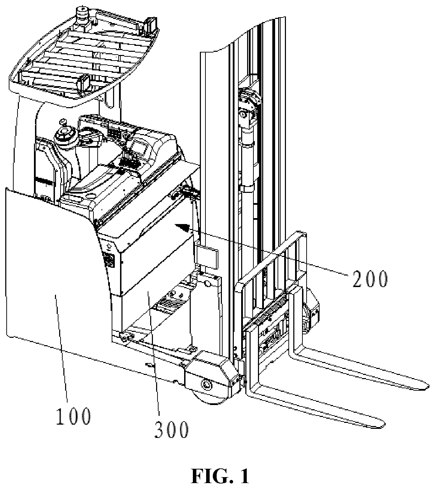

As shown in FIG. 1, after replacing the battery from a lead-acid battery with a lithium battery 200, due to the small size and light weight of the lithium battery 200, an additional counterweight 300 needs to be added to reach the weight of the basic lead-acid battery model. Therefore, the existing reach truck with lithium battery 200 is mainly divided into three parts from top to bottom. The upper part remains unchanged at which main components such as multi-way valve, controller assembly, and cover are mainly arranged. The middle part is lithium battery 200, and the lower part is additional counterweight. Of course, the middle part of the lithium battery 200 and the lower part of the additional weight may also be integrated as an assembly of lithium battery 200 (including the additional weight). In that case, the assembly of lithium battery 200 (including the additional weight) is equivalent to or even the same as the original lead-acid battery in terms of external dimensions. Therefore, compared with the existing lead-acid battery reach truck with lithium battery 200, this reach truck with lithium battery 200 is the same or similar except for some changes regarding the lithium battery. For the reach truck with lithium battery 200 in the conventional technology, although both the lithium batteries 200 are with a small size, after adding additional weights, the overall size is equivalent to the overall size of the existing lead-acid battery. Therefore, the advantage with small size of the lithium battery 200 is not that obviously. For the whole vehicle, although the power is replaced by a lithium battery 200, the structure and size of the whole vehicle are still the same as those with the conventional lead-acid battery, especially for the size of the battery compartment, which is very high, affecting the vision and space in the cab accordingly.

Therefore, how to adjust the battery compartment layout of the lithium battery reach truck and improve the driver's operating vision is a technical problem that the technicians in this field need to be solved at present.

The patent of US11165116B2 discloses a battery for an industrial truck, which comprises a battery body with a first base body and a second base body. The second base body is positioned adjacent to the first base body. The first base body and the second base body extend a same length in one dimension and the first base body has a greater height than the second base body. The patent of US20190225469A1 discloses a truck, which comprises two wheel arms each coupled to a load wheel, a thrust mast positioned between the wheel arms, a drive unit comprising a steerable drive wheel, and a counterweight comprised of cast iron and positioned in a front region of the reach truck. The patent of CN211496821U discloses a forward forklift, which comprises a forklift body assembly and a portal assembly. A forward-moving type battery unit is arranged below the front part of the vehicle body assembly; a driving system is arranged on one side of the rear left side; a balance wheel assembly is arranged on the other side; a control system is arranged below an operating system; a power system is arranged above the driving system; the battery unit is detachably connected with the portal assembly; the portal frame moves forwards to drive the battery to move out; a balance suspension system is connected between the driving system and the balance wheel assembly to achieve dynamic balance. The patent of CN215626569U discloses a mounting structure of a forklift hydraulic oil tank, which comprises an oil tank body, a base, a fastener and a shock pad, the oil tank body and the base are detachably connected together through the fastener, and the shock pad is installed between the oil tank body and the base. A plurality of grooves with cylindrical inner surfaces are formed in the bottom of the oil tank body, the shock pads are installed in the grooves, the fasteners are connected with the shock pads through die vulcanization pressing films, the fasteners comprise bolts and steel plates, the bolts are connected with the steel plates in a welded mode, and external threads of the bolts are connected with internal threads of corresponding screw holes in the base.

### SUMMARY

An object according to the present application is to provide a reach truck with a special structure for lithium battery, which can effectively save space with a stable structure, a low center of gravity and a wide vision for operators.

In order to achieve the above object, the following technical solutions are provided according to the present application.

A reach truck with a special structure for lithium battery, including a frame and a lithium battery and a controller assembly mounted on the frame; the frame includes a bottom plate, side plates and a partition plate located on an upper side of the bottom plate, the side plates are located on the left and right sides of the bottom plate and the partition plate, a battery compartment for receiving the lithium battery is formed between the partition plate, the bottom plate and the side plates; a concave portion is arranged on the partition plate. The controller assembly is placed at the position of the concave portion of the partition plate. The shape of the lithium battery corresponds to the shape of the battery compartment. The reach truck with a special structure for lithium battery further comprises a multi-way valve operating assembly and a multi-way valve mounting bracket, the multi-way valve mounting bracket is fixedly mounted on the partition plate, and the multi-way valve mounting bracket is suspended above the concave portion of the partition plate, the multi-way valve operating assembly is mounted on the multi-way valve mounting bracket, the multi-way valve mounting bracket comprises a multi-way valve mounting panel and an oil pipe fixing panel, a height of the oil pipe fixing panel is lower than a height of the multi-way valve mounting panel, and baffles are arranged at the periphery of the multi-way valve mounting panel and the oil pipe fixing panel, a gap for oil to flow down is provided between the multi-way valve mounting panel and the oil pipe fixing panel. In the above arrangement, the multi-way valve mounting bracket is suspended above the concave portion of the partition plate, so that the multi-way valve operating assembly is arranged on the upper part of the controller assembly, the space of the multi-way valve operating assembly in the conventional technology can be made free, which can effectively improve the space and field of view of the cab.

Preferably, the battery compartment is in a concave shape.

Preferably, a step is provided at a top of the lithium battery, and the low-step surface of the lithium battery corresponds to the position of the concave portion of the partition plate.

Preferably, a wire harness is provided on a side of the low-step surface of the lithium battery away from the high-step surface of the lithium battery; the battery compartment is provided with space for the wire harness into which the wire harness is placed.

Preferably, the frame further includes a rear panel located on a rear side of the bottom plate. The rear panel includes a panel body, a main plate and a steering wheel baffle. The panel body, the main plate and the steering wheel baffle are all solid counterweight plates.

Preferably, the number of the steering wheel baffles is at least two, and the baffles are arc-shaped; all the steering wheel baffles surrounds to form an annular structure.

Preferably, the frame further includes a left leg portion and a right leg portion, and the rear panel is connected between the left leg portion and the right leg portion; the left leg portion is a weighted left leg with a solid structure, and the right leg portion is a weighted right leg with a solid structure.

Preferably, an oil pipe is provided on a side of the oil pipe fixing panel.

The reach truck with a special structure for lithium battery provided by the present application includes a frame and a lithium battery and controller assembly mounted on the frame; the frame includes a bottom plate, side plates and a partition plate located on an upper side of the bottom plate, the side plates are located on the left and right sides of the bottom plate and the partition plate, a battery compartment for receiving the lithium battery is formed between the partition plate, the bottom plate and the side plates; a concave portion is arranged on the partition plate. The controller assembly is placed at the position of the concave portion of the partition plate. The shape of the lithium battery corresponds to the shape of the battery compartment. In the reach truck with a special structure for lithium batteries provided by the present application, by adjusting the structure of the partition plate, the space of the battery compartment is changed, and the structure of the lithium battery is adjusted. The controller assembly is placed in the concave portion, which can effectively save space, reduce the installation height of the controller assembly, and effectively improve the driver's field of vision.

### BRIEF DESCRIPTION OF THE DRAWINGS

For more clearly illustrating the technical solutions of embodiments of the present application or in the conventional technology, drawings referred to for describing the embodiments or the conventional technology will be briefly described hereinafter. Apparently, the drawings in the following description are only several examples of the present application, and for those skilled in the art, other drawings may be obtained based on these drawings without any creative efforts.
FIG. 1 is a schematic structural diagram of a lithium battery reach truck in the conventional technology;
FIG. 2 is a schematic structural diagram of a specific embodiment of a reach truck with a special structure for lithium battery provided by the present application;
FIG. 3 is a schematic diagram of structure of the reach truck with a special structure for lithium battery shown in FIG. 2 in an A-direction;
FIG. 4-1 is a schematic structural diagram of a lithium battery in a reach truck with a special structure for lithium battery provided by the present application;
FIG. 4-2 is a front view of the lithium battery in the reach truck with a special structure for lithium battery provided by the present application;
FIG. 5 is a schematic diagram of the position and structure of the lithium battery in the reach truck with a special structure for lithium battery provided by the present application;
FIG. 6 is a schematic diagram of the position of a multi-way valve and an operating assembly in the reach truck with a special structure for lithium battery provided by the present application;
FIG. 7 is a schematic diagram of a multi-way valve mounting bracket and a frame in the reach truck with a special structure for lithium battery provided by the present application;
FIG. 8-1 is a schematic diagram of the upper part of the frame of the reach truck with a special structure for lithium battery provided by the present application;
FIG. 8-2 is a schematic diagram of the lower part of the frame of the reach truck with a special structure for lithium battery provided by the present application;
FIG. 9-1 is a side view of a right leg of the counterweight in the reach truck with a special structure for lithium battery provided by the present application;
FIG. 9-2 is a A-A cross-sectional view of the right leg of the counterweight in the reach truck with a special structure for lithium battery shown in FIG. 9-1;
FIG. 9-3 is a front view of the right leg of the counterweight in the reach truck with a special structure for lithium battery provided by the present application;
FIG. 10-1 is an axonometric view of a rear panel in the reach truck with a special structure for lithium battery provided by the present application;
FIG. 10-2 is a front view of the rear panel of the reach truck with a special structure for lithium battery provided by the present application;
FIG. 10-3 is a sectional view of A-A in the rear panel shown in FIG. 10-2;
FIG. 10-4 is a sectional view of B-B in the rear panel shown in FIG. 10-2;
FIG. 10-5 is a sectional view of C-C in the rear panel shown in FIG. 10-2;
FIG. 11 is a front view of the frame of the reach truck with a special structure for lithium battery provided by the present application;
FIG. 12 is a schematic diagram of the regional functions of the frame of the reach truck with a special structure for lithium battery provided by the present application;
FIG. 13 is a schematic structural diagram of a multi-way valve mounting bracket in the reach truck with a special structure for lithium battery provided by the present application;
FIG. 14 is a schematic structural diagram of another reach truck with a special structure for lithium battery provided by the present application;

Reference numerals in the figures: 100 frame; 101 partition plate; 102 side plate; 103 bottom plate; 104 right leg portion; 105 left leg portion; 106 rear panel; 106-1 panel body; 106-2 main plate; 106-3 steering wheel baffle; 200 lithium battery; 300 counterweight; 400 controller assembly; 500 multi-way valve operating assembly; 501 electromagnetic multi-way valve; 502 manipulating part; 600 multi-way valve mounting bracket; 601 oil pipe; 602 baffle; 700 sliding frame.

### DETAILED DESCRIPTION OF THE EMBODIMENTS

A core of the present application is to provide a reach truck with a special structure for lithium battery, which may effectively save space, and improve the driver's operating field of vision.

Technical solutions in the embodiments of the present application are clearly and completely described hereinafter in conjunction with the drawings in the embodiments of the present application. Apparently, the embodiments described in the following are only some embodiments of the present application, rather than all embodiments. Based on the embodiments in the present application, all of other embodiments, made by the person skilled in the art without any creative efforts, fall into the scope of protection of the present application.

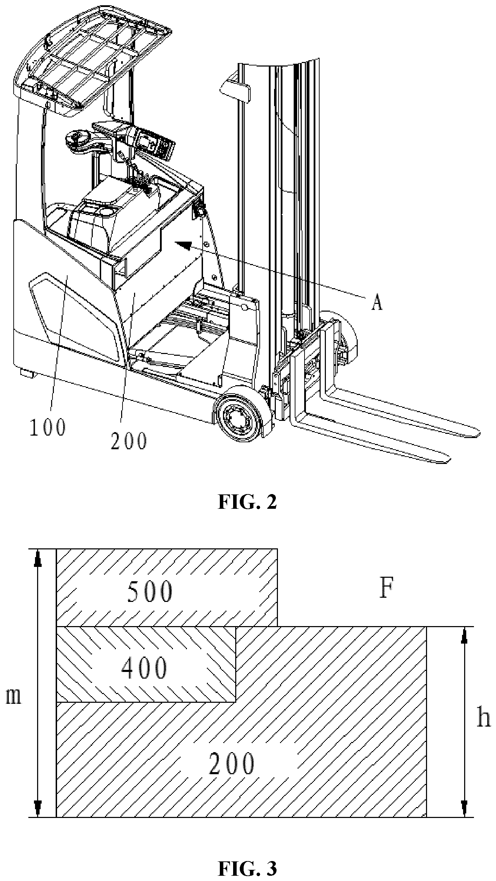

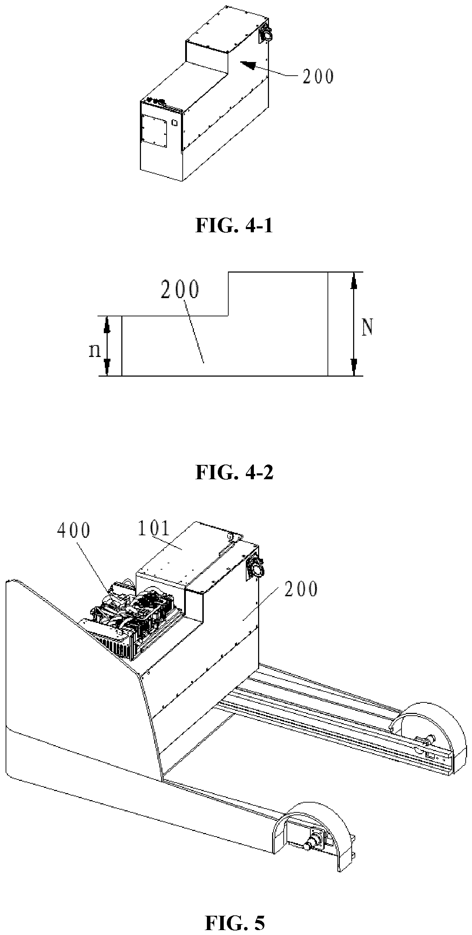

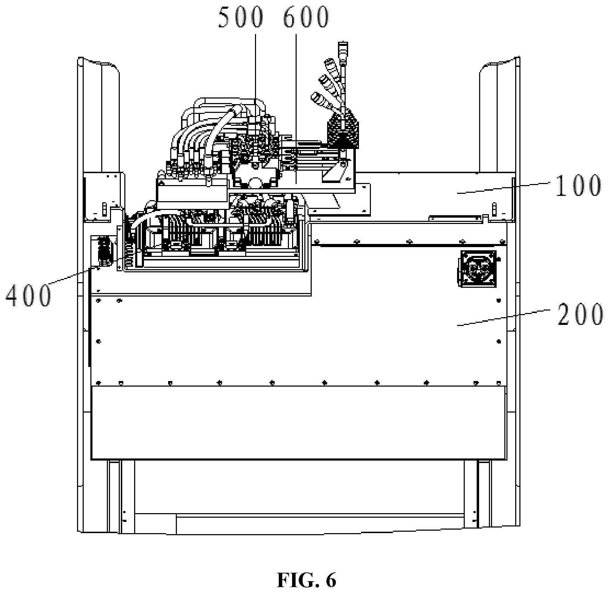

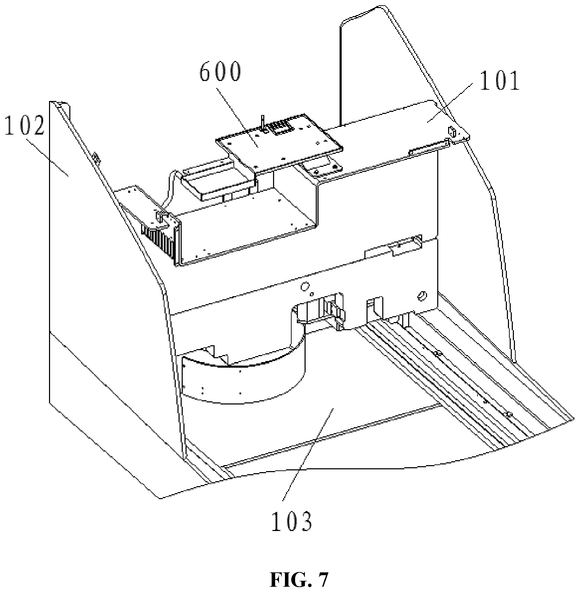

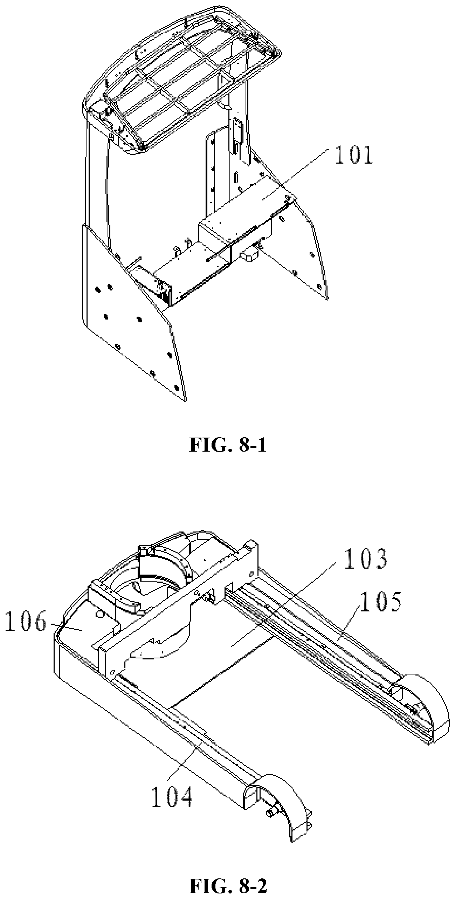

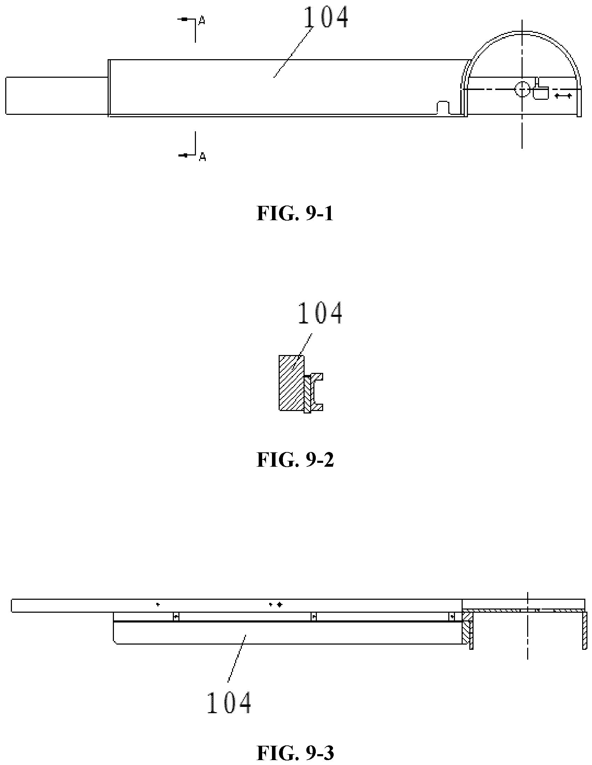

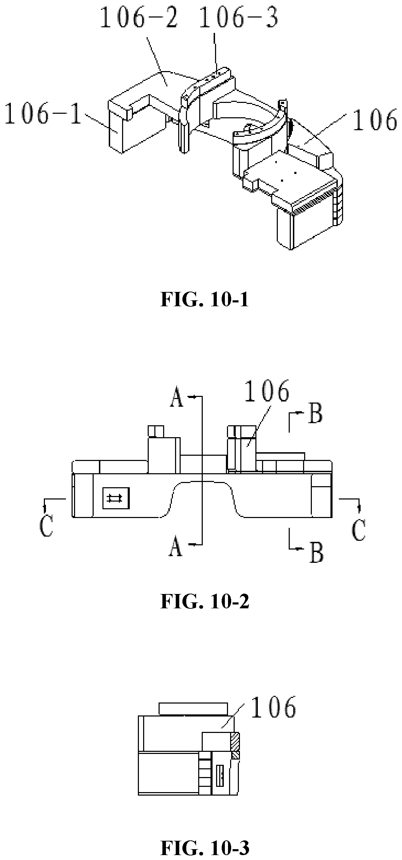

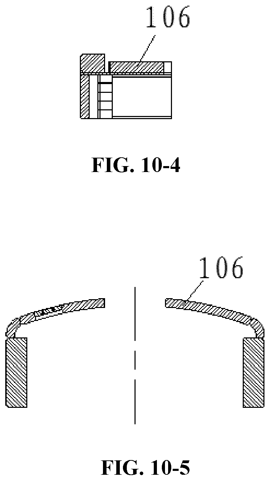

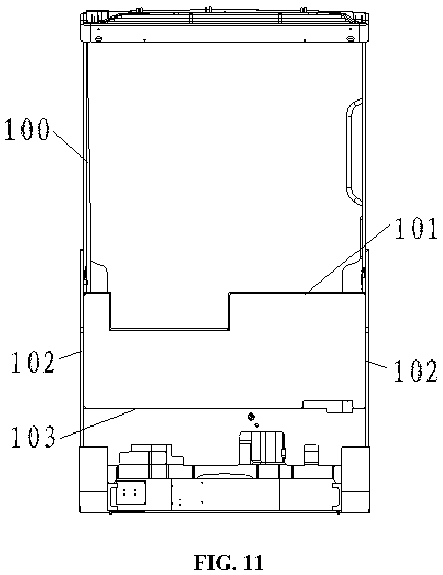

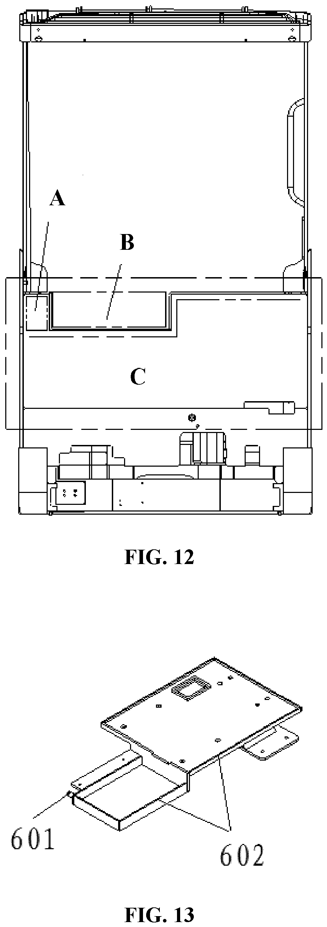

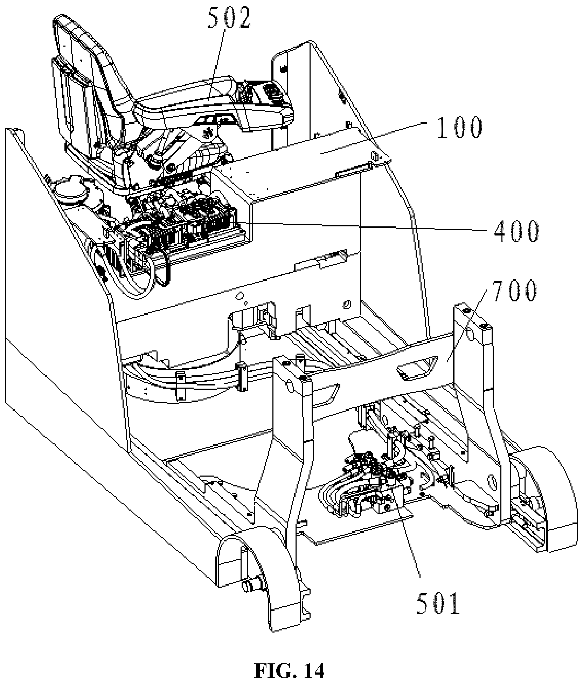

Referring to FIG. 2 to FIG. 14, FIG. 2 is a schematic structural diagram of a specific embodiment of a reach truck with a special structure for lithium battery provided by the present application; FIG. 3 is a schematic diagram of the structure of the reach truck with a special structure for lithium battery shown in FIG. 2 in an A-direction; FIG. 4-1 is a schematic structural diagram of a lithium battery in a reach truck with a special structure for lithium battery provided by the present application; FIG. 4-2 is a front view of the lithium battery in the reach truck with a special structure for lithium battery provided by the present application; FIG. 5 is a schematic diagram of the position and structure of the lithium battery in the reach truck with a special structure for lithium battery provided by the present application; FIG. 6 is a schematic diagram of the position of a multi-way valve and an operating assembly in the reach truck with a special structure for lithium battery provided by the present application; FIG. 7 is a schematic diagram of a multi-way valve mounting bracket and a frame in the reach truck with a special structure for lithium battery provided by the present application; FIG. 8-1 is a schematic diagram of the upper part of the frame of the reach truck with a special structure for lithium battery provided by the present application; FIG. 8-2 is a schematic diagram of the lower part of the frame of the reach truck with a special structure for lithium battery provided by the present application; FIG. 9-1 is a side view of a right leg of the counterweight in the reach truck with a special structure for lithium battery provided by the present application; FIG. 9-2 is a A-A cross-sectional view of the right leg of the counterweight in the reach truck with a special structure for lithium battery shown in FIG. 9-1; FIG. 9-3 is a front view of the right leg of the counterweight in the reach truck with a special structure for lithium battery provided by the present application; FIG. 10-1 is an axonometric view of a rear panel in the reach truck with a special structure for lithium battery provided by the present application; FIG. 10-2 is a front view of the rear panel of the reach truck with a special structure for lithium battery provided by the present application; FIG. 10-3 is a sectional view of A-A in the rear panel shown in FIG. 10-2; FIG. 10-4 is a sectional view of B-B in the rear panel shown in FIG. 10-2; FIG. 10-5 is a sectional view of C-C in the rear panel shown in FIG. 10-2; FIG. 11 is a front view of the frame of the reach truck with a special structure for lithium battery provided by the present application; FIG. 12 is a schematic diagram of the regional functions of the frame of the reach truck with a special structure for lithium battery provided by the present application; FIG. 13 is a schematic structural diagram of a multi-way valve mounting bracket in the reach truck with a special structure for lithium battery provided by the present application; FIG. 14 is a schematic structural diagram of another reach truck with a special structure for lithium battery provided by the present application.

In this embodiment, the reach truck with a special structure for lithium battery includes a frame 100, a lithium battery 200 and a controller assembly 400. The lithium battery 200 and the controller assembly 400 are both mounted on the frame 100;

Specifically, the frame 100 includes a bottom plate 103, a side plate 102 and a partition plate 101 located on the upper side of the bottom plate 103. The number of side plates 102 is at least two, and the side plates 102 are located on the left and right sides of the bottom plate 103 and the partition plate 101. A battery compartment into which the lithium battery 200 is placed is formed between the partition plates 101, the bottom plate 103 and the side plate 102.

Further, a concave portion is arranged on the partition plate 101. Specifically, the partition plate 101 can be formed by bending, and the partition plate 101 is preferably sheet metal; the controller assembly 400 is placed at the position of the upper concave portion of the partition plate 101. That is, the position of the controller assembly 400 is lowered to the position of the concave portion. The shape of the lithium battery 200 corresponds to the shape of the battery compartment. The upper part of the lithium battery 200 is also provided with a concave portion corresponding to the position of the concave portion of the partition plate 101. As shown in FIG. 4-1 and FIG. 4-2, the height n of one side of the lithium battery 200 is less than the height N of the other side of the lithium battery 200. For example, the lithium battery can be in a laterally placed L-shaped structure. The lithium battery 200 is configured in a stepped special shape, which can be effectively fitted with the position of the concave portion under the premise of satisfying the capacity of the lithium battery 200.

In the reach truck with a special structure for lithium batteries provided by the present application, by adjusting the structure of the partition plate 101, the space of the battery compartment is changed, and the structure of the lithium battery 200 is adjusted. The controller assembly 400 is placed in the concave portion, which can effectively save space, reduce the installation height of the controller assembly 400, and effectively improve the driver's field of vision. The truck has better ergonomics, which is mainly in respect of a wider operating field of vision and a more spacious operating space.

On the basis of the above-mentioned embodiments, the battery compartment is in a concave shape, as shown in FIG. 6 and FIG. 11. The above arrangement can meet the installation requirements of the controller assembly 400. The area B shown in FIG. 12 is used as the arrangement space of the controller assembly 400 while the installation space of the lithium battery 200 is sufficient. The area C shown in FIG. 12 is used as the space for receiving the lithium battery 200, and components, mainly the controller assembly 400, are arranged above the lithium battery 200, i.e., above the upper part of the concave portion of the lithium battery 200, so as to be complementary to the stepped shape of the lithium battery 200, forming a complete rectangular parallelepiped as a whole.

Specifically, the battery compartment is designed with a special-shaped structure, such as a concave-shaped structure, so that the component layout can make full use of the space. Of course, the battery compartment may also be in other shapes, any structure that may facilitate the arrangement of the controller assembly and save space can be used.

On the basis of the above-mentioned embodiments, the top of the lithium battery 200 is provided with a step. The lower-surface portion of the step of the lithium battery 200 corresponds to the position of the concave portion of the partition plate 101, which facilitates the installation of the lithium battery 200 and maximizes the utilization rate of the battery compartment.

On the basis of the above-mentioned embodiments, a wire harness is provided on a side of the lower-surface portion of the step of the lithium battery 200 away from the high-surface portion of the step of the lithium battery; a wire harness area for placing wire harnesses is provided in the battery compartment, such as area A shown in FIG. 12, which is used as the wire harness space for the lithium battery 200.

Further, due to the small size and light weight of the lithium battery 200, an additional counterweight is required to complement for the weight. No additional counterweight is provided in the battery compartment, but the height of the whole battery compartment and operating platform is reduced with the advantage of the small-sized battery, and the counterweight is transferred and distributed on the frame 100.

Specifically, on the basis of the above-mentioned embodiments, the frame 100 further includes a rear panel 106 located on the rear side of the bottom plate 103. The rear panel 106 includes a panel body 106-1, a main plate 106-2 and a steering wheel baffle 106-3. The panel body 106-1, the main plate 106-2 and the steering wheel baffle 106-3 are all solid counterweight plates. As shown in FIG. 10-1 to FIG. 10-4, the panel body 106-1 extends in the longitudinal direction; the main plate 106-2 extends in the horizontal direction. The thickness of the panel body 106-1, the main plate 106-2 and the steering wheel baffle 106-3 can be increased in order to increase the counterweight. The counterweight of the rear panel 106 makes an improvement compared with the rear panel 106 of the frame structure in the vehicle of conventional technology. In order to achieve the effect of counterweight and make full use of the space, this part of the structure is made into a special shape so as to increase the weight as much as possible without affecting the layout of other components. The structure of the rear panel 106 can be made by tailor-welding many small-piece iron plates, or can be cast as a whole.

On the basis of the above-mentioned embodiments, the number of the steering wheel baffles 106-3 is at least two, and the baffles are arc-shaped; all of the steering wheel baffles 106-3 are surrounded to form an annular structure. The rotating shaft of the steering wheel of the truck can pass through the annular structure. The steering wheel baffle 106-3 is set in an arc shape because the panel body 106-1, the main plate 106-2 and the steering wheel baffle 106-3 are all solid counterweight plates, which are thick and occupy large space. Therefore, the steering wheel baffle plates 106-3 are configured in an arc shape so as to provide more space on both sides of the surface of the rear panel 106 in order to mount accessories such as a hydraulic oil tank.

On the basis of the above-mentioned embodiments, the frame 100 further includes a left leg portion 105 and a right leg portion 104, and the rear panel 106 is connected between the left leg portion 105 and the right leg portion 104; the left leg portion 105 is a weighted left leg with a solid structure, and the right leg portion 104 is a weighted right leg with a solid structure, thereby effectively increasing the bottom weight of the frame 100 and improving the stability of the frame 100 without occupying too much space.

On the basis of the above-mentioned embodiments, the reach truck with a special structure for lithium battery further includes a multi-way valve operating assembly 500 and a multi-way valve mounting bracket 600, the multi-way valve mounting bracket 600 is fixedly mounted on the partition plate 101, and the multi-way valve mounting bracket 600 is suspended above the concave portion of the partition plate 101. The multi-way valve operating assembly 500 is mounted on the multi-way valve mounting bracket 600. The multi-way valve mounting bracket 600 is suspended above the concave portion of the partition plate 101, so that the multi-way valve operating assembly 500 is arranged on the upper part of the controller assembly 400. In that case, the space of the multi-way valve operating assembly 500 in the conventional technology can be made free, which can effectively improve the space and field of view of the cab.

Specifically, by adjusting the structure of the battery compartment and configuring the multi-way valve mounting bracket 600, both the height m of the operating platform and the height h of the battery compartment of the electric truck are greatly reduced compared with the conventional technology. More importantly, a visible area F is obtained, which is the position of the driver's knee, and it is also the position of the driver's line of sight at the lower right front, and thus this visible area F expands the driver's operating space and visual field.

Further, the multi-way valve operating assembly 500 is arranged above the controller assembly 400. The multi-way valve operating assembly 500 is separated from the controller assembly 400 by the multi-way valve mounting bracket 600 to realize electro-hydraulic separation, as shown in FIG. 6. The multi-way valve operating assembly 500 is fixedly mounted on the multi-way valve mounting bracket 600, and the multi-way valve mounting bracket 600 is fixedly mounted on the frame 100, as shown in FIG. 7.

On the basis of the above-mentioned embodiments, the multi-way valve mounting bracket 600 includes a multi-way valve mounting panel and an oil pipe fixing panel. The height of the oil pipe fixing panel is lower than the height of the multi-way valve mounting panel. In addition, baffles 602 are provided on the periphery of the multi-way valve mounting panel and the oil pipe fixing panel, and a gap for the oil to flow down is provided between the multi-way valve mounting panel and the oil pipe fixing panel.

On the basis of the above-mentioned embodiments, an oil pipe 601 is provided on a side of the oil pipe fixing panel.

Specifically, the shape of the multi-way valve mounting bracket 600 is shown in FIG. 13. The multi-way valve mounting bracket 600 is in a stepped shape, and a multi-way valve mounting panel is arranged at the high-step position. The oil pipe fixing panel is located at the low-step position. Baffles 602 are arranged around the high-step surface and low-step surface to prevent the oil from flowing out. There are multiple through holes in the high-step position, which are suitable for the installation of multi-way valves and other components. The hole through which the bolt passes is mounted with a gasket to prevent oil leakage from the through hole. In addition, an oil pipe 601 is provided on the low-step surface of the multi-way valve mounting bracket 600, and an extra pipe can be connected to the outside of the oil pipe 601 to guide the leaked oil to other locations. In this way, even if the multi-way valve leaks, the oil is not able to flow to the lower controller assembly 400, which realizes "electro-hydraulic separation". In addition, the multi-way valve operating assembly 500 and the controller assembly 400 are arranged up and down, and the structure is compact, which provides the aforementioned visual area F for the cab, and improves the space and field of view of the cab.

The electric truck provided by this embodiment integrates the required counterweight into the frame 100, which are mainly distributed on the rear panel 106, the left leg portion 105 and the right leg portion 104, so that the center of gravity of the whole vehicle is lower and the stability of the whole vehicle is better. The counterweight is integrated into the frame 100, and thus the lithium battery 200 will no longer require additional counterweights. Therefore, the advantage of the small size of the lithium battery 200 can be used to reduce the height of the battery compartment, thereby reducing the height of the operating platform, which may improve the comfort of operation and reduce the center of gravity of the driver's operation. Due to the innovative shape and structure of the lithium battery 200, which adopts a stepped shape, the low-step part can be used to arrange components such as the controller assembly, making full use of the space. On this basis, the multi-way valve operating assembly 500 is stacked and arranged above the controller assembly 400 through the multi-way valve mounting bracket 600. In that case, under the premise of realizing "electro-hydraulic separation", the space is fully utilized. The advantages are as follow: it frees a large space in front of the driver's right side, which not only improves the driver's operating space, especially the leg room, but also improves the driver's operating field of vision and the overall driving sense of openness.

It should be noted that the above introduction is based on the model of the mechanical valve, that is, the model with the manipulating part 502 in a manual operating lever. Of course, the structure of the frame 100 provided in this embodiment may also be applied to other electric truck models, as shown in FIG. 14. For a vehicle model using an electro-proportional valve, the multi-way valve operating assembly 500 includes a finger switch operating component and an electromagnetic multi-way valve 501. The finger switch manipulating part is located on the seat, and is connected with the electromagnetic multi-way valve 501 by electrical signals. The operation sequence is as follows: the finger switch manipulating part 502→ the controller assembly 400→ the electromagnetic multi-way valve 501 acts, for the above vehicle models, the structure of the frame 100 provided in this embodiment is also applicable. Specifically, the structure of the frame 100 remains unchanged, and the position of the controller assembly 400 remains unchanged. The electromagnetic multi-way valve 501 is arranged on the sliding frame 700, and the sliding frame 700 is configured as a sub-frame, which can be moved forward and backward; the finger switch manipulating part 502 is above the controller assembly 400, which constitutes a complete set of mechanisms, the mechanism is connected and mounted with the seat, and floats with the up and down of the seat, which has good ergonomics. With the structure of the frame 100 provided above, there is also sufficient space between the controller assembly 400 and the finger switch manipulating part 502, so that the finger switch manipulating part 502 cannot interfere with the controller assembly 400 when floating with the seat. For this type of electric truck, as the finger switch manipulating part 502 is connected with the seat and floats with the seat, which greatly improves the driver's operating comfort, and has a wide field of vision and operating space.

The above embodiments are described in a progressive manner. Each of the embodiments is mainly focused on describing its differences from other embodiments, and reference may be made among these embodiments with respect to the same or similar parts. The reach truck with a special structure for lithium battery provided by the present application is introduced in detail hereinbefore. The principle and embodiments of the present application are described through specific examples herein. The description of the above-described embodiments is merely used to facilitate understanding the method and core idea of the present application. It should be noted that, for those skilled in the art, many improvements and modifications may be further made to the present disclosure without departing from the scope of appended claims.

## Claims

1. A reach truck with a special structure for lithium battery, comprising a frame (100) and a lithium battery (200) and a controller assembly (400) mounted on the frame (100); wherein the frame (100) comprises a bottom plate (103), side plates (102) and a partition plate (101) located on an upper side of the bottom plate (103), wherein the side plates (102) are located on the left and right sides of the bottom plate (103) and the partition plate (101), wherein a battery compartment for receiving the lithium battery (200) is formed between the partition plate (101), the bottom plate (103) and the side plates (102); wherein a concave portion is arranged on the partition plate (101), wherein the controller assembly (400) is placed at the position of the concave portion of the partition plate (101), wherein the shape of the lithium battery (200) corresponds to the shape of the battery compartment,
**characterized in that**,
the reach truck with a special structure for lithium battery further comprises a multi-way valve operating assembly (500) and a multi-way valve mounting bracket (600), wherein the multi-way valve mounting bracket (600) is fixedly mounted on the partition plate (101), and the multi-way valve mounting bracket (600) is suspended above the concave portion of the partition plate (101), wherein the multi-way valve operating assembly (500) is mounted on the multi-way valve mounting bracket (600),
and **in that**
the multi-way valve mounting bracket (600) comprises a multi-way valve mounting panel and an oil pipe fixing panel, wherein a height of the oil pipe fixing panel is lower than a height of the multi-way valve mounting panel, and baffles (602) are arranged at the periphery of the multi-way valve mounting panel and the oil pipe fixing panel, wherein a gap for oil to flow down is provided between the multi-way valve mounting panel and the oil pipe fixing panel.

2. The reach truck with a special structure for lithium battery according to claim 1, wherein the battery compartment is in a concave shape.

3. The reach truck with a special structure for lithium battery according to claim 1, wherein a step is provided at a top of the lithium battery (200), and the low-step surface of the lithium battery (200) corresponds to the position of the concave portion of the partition plate (101).

4. The reach truck with a special structure for lithium battery according to claim 2 or 3, wherein a wire harness is provided on a side of the low-step surface of the lithium battery (200) away from the high-step surface of the lithium battery; wherein the battery compartment is provided with space for the wire harness into which the wire harness is placed.

5. The reach truck with a special structure for lithium battery according to any one of the preceding claims, wherein the frame (100) further comprises a rear panel (106) located on a rear side of the bottom plate (103), wherein the rear panel (106) comprises an panel body (106-1), a main plate (106-2) and a steering wheel baffle (106-3), wherein the panel body (106-1), the main plate (106-2) and the steering wheel baffle (106-3) are all solid counterweight plates.

6. The reach truck with a special structure for lithium battery according to claim 5, wherein the number of the steering wheel baffles (106-3) is at least two, and the baffles are arc-shaped; wherein all the steering wheel baffles (106-3) surround to form an annular structure.

7. The reach truck with a special structure for lithium battery according to claim 5 or 6, wherein the frame (100) further comprises a left leg portion (105) and a right leg portion (104), and the rear panel (106) is connected between the left leg portion (105) and the right leg portion (104); wherein the left leg portion (105) is a weighted left leg with a solid structure, and the right leg portion (104) is a weighted right leg with a solid structure.

8. The reach truck with a special structure for lithium battery according to any one of the preceding claims, wherein an oil pipe (601) is provided on a side of the oil pipe fixing panel.

## Patentansprüche

1. Schubmaststapler mit einer Spezialstruktur für Lithiumbatterien, umfassend einen Rahmen (100) und eine Lithiumbatterie (200) und eine auf dem Rahmen (100) montierte Steueranordnung (400); wobei der Rahmen (100) eine Bodenplatte (103), Seitenplatten (102) und eine Trennplatte (101) umfasst, die sich auf einer Oberseite der Bodenplatte (103) befindet, wobei die Seitenplatten (102) auf den linken und rechten Seiten der Bodenplatte (103) und der Trennplatte (101) angeordnet sind, wobei zwischen der Trennplatte (101), der Bodenplatte (103) und den Seitenplatten (102) ein Batteriefach zur Aufnahme der Lithiumbatterie (200) gebildet ist; wobei auf der Trennplatte (101) ein konkaver Abschnitt angeordnet ist, wobei die Steueranordnung (400) an der Position des konkaven Abschnitts der Trennplatte (101) untergebracht ist, wobei die Form der Lithiumbatterie (200) der Form des Batteriefachs entspricht,
**dadurch gekennzeichnet, dass** der Schubmaststapler mit einer Spezialstruktur für Lithiumbatterien ferner eine Mehrwegeventilbedieneinheit (500) und eine Mehrwegeventilmontagehalterung (600) umfasst, wobei die Mehrwegeventilmontagehalterung (600) fest an der Trennplatte (101) montiert ist und die Mehrwegeventilmontagehalterung (600) über dem konkaven Abschnitt der Trennplatte (101) aufgehängt ist, wobei die Mehrwegeventilbedieneinheit (500) an der Mehrwegeventilmontagehalterung (600) montiert ist,
und dadurch, dass die Mehrwegeventilmontagehalterung (600) eine Mehrwegeventilmontageplatte und eine Ölleitungsbefestigungsplatte umfasst, wobei eine Höhe der Ölleitungsbefestigungsplatte geringer als eine Höhe der Mehrwegeventilmontageplatte ist, und wobei Leitbleche (602) an dem Randbereich der Mehrwegeventilmontageplatte und der Ölleitungsbefestigungsplatte angeordnet sind, wobei zwischen der Mehrwegeventilmontageplatte und der Ölleitungsbefestigungsplatte ein Spalt für ein Herunterfließen von Öl vorgesehen ist.

2. Schubmaststapler mit einer Spezialstruktur für Lithiumbatterien nach Anspruch 1, wobei das Batteriefach eine konkave Form aufweist.

3. Schubmaststapler mit einer Spezialstruktur für Lithiumbatterien nach Anspruch 1, wobei an einer Oberseite der Lithiumbatterie (200) eine Stufe vorgesehen ist und wobei die untere Stufenfläche der Lithiumbatterie (200) der Position des konkaven Abschnitts der Trennplatte (101) entspricht.

4. Schubmaststapler mit einer Spezialstruktur für Lithiumbatterien nach Anspruch 2 oder 3, wobei ein Kabelbaum auf einer Seite der unteren Stufenfläche der Lithiumbatterie (200) vorgesehen ist, die von der oberen Stufenfläche der Lithiumbatterie abgewandt ist, wobei das Batteriefach mit Platz für den Kabelbaum versehen ist, in dem der Kabelbaum untergebracht ist.

5. Schubmaststapler mit einer Spezialstruktur für Lithiumbatterien nach einem der vorhergehenden Ansprüche, wobei der Rahmen (100) ferner eine Rückwand (106) umfasst, die auf einer Rückseite der Bodenplatte (103) angeordnet ist, wobei die Rückwand (106) einen Plattenkörper (106-1), eine Hauptplatte (106-2) und ein Lenkradleitblech (106-3) umfasst, wobei der Plattenkörper (106-1), die Hauptplatte (106-2) und das Lenkradleitblech (106-3) alle solide Gegengewichtsplatten sind.

6. Schubmaststapler mit einer Spezialstruktur für Lithiumbatterien nach Anspruch 5, wobei die Anzahl der Lenkradleitbleche (106-3) mindestens zwei beträgt und die Leitbleche bogenförmig sind, wobei alle Lenkradleitbleche (106-3) einander umgeben, um eine ringförmige Struktur zu bilden.

7. Schubmaststapler mit einer Spezialstruktur für Lithiumbatterien nach Anspruch 5 oder 6, wobei der Rahmen (100) ferner einen linken Beinabschnitt (105) und einen rechten Beinabschnitt (104) umfasst, und wobei die Rückwand (106) zwischen dem linken Beinabschnitt (105) und dem rechten Beinabschnitt (104) verbunden ist; wobei der linke Beinabschnitt (105) ein massives linkes Bein mit einer festen Struktur ist, und wobei der rechte Beinabschnitt (104) ein massives rechtes Bein mit einer festen Struktur ist.

8. Schubmaststapler mit Spezialstruktur für Lithiumbatterien nach einem der vorhergehenden Ansprüche, wobei an einer Seite der Ölleitungsbefestigungsplatte eine Ölleitung (601) vorgesehen ist.

## Revendications

1. Chariot élévateur à mât rétractable avec une structure spéciale pour batterie au lithium, comprenant un châssis (100) et une batterie au lithium (200) et un ensemble de commande (400) monté sur le châssis (100) ; dans lequel le châssis (100) comprend une plaque inférieure (103), des plaques latérales (102) et une plaque de séparation (101) situées sur un côté supérieur de la plaque inférieure (103), dans lequel les plaques latérales (102) sont situées sur les côtés gauche et droit de la plaque inférieure (103) et de la plaque de séparation (101), dans lequel un compartiment de batterie pour recevoir la batterie au lithium (200) est formé entre la plaque de séparation (101), la plaque inférieure (103) et les plaques latérales (102) ; dans lequel une partie concave est agencée sur la plaque de séparation (101), dans lequel l'ensemble de commande (400) est placé à la position de la partie concave de la plaque de séparation (101), dans lequel la forme de la batterie au lithium (200) correspond à la forme du compartiment de batterie,
**caractérisé en ce que**,
le chariot élévateur à mât rétractable avec une structure spéciale pour batterie au lithium comprend en outre un ensemble d'actionnement de vanne multivoies (500) et un support de montage de vanne multivoies (600), dans lequel le support de montage de vanne multivoies (600) est monté de manière fixe sur la plaque de séparation (101), et le support de montage de vanne multivoies (600) est suspendu au-dessus de la partie concave de la plaque de séparation (101), dans lequel l'ensemble d'actionnement de vanne multivoies (500) est monté sur le support de montage de vanne multivoies (600),
et **en ce que**
le support de montage de vanne multivoies (600) comprend un panneau de montage de vanne multivoies et un panneau de fixation de tuyau d'huile, dans lequel une hauteur du panneau de fixation de tuyau d'huile est inférieure à une hauteur du panneau de montage de vanne multivoies, et des déflecteurs (602) sont agencés à la périphérie du panneau de montage de vanne multivoies et du panneau de fixation de tuyau d'huile, dans lequel un espace pour que l'huile s'écoule vers le bas est prévu entre le panneau de montage de vanne multivoies et le panneau de fixation de tuyau d'huile.

2. Chariot élévateur à mât rétractable avec une structure spéciale pour batterie au lithium selon la revendication 1, dans lequel le compartiment de batterie est de forme concave.

3. Chariot élévateur à mât rétractable avec une structure spéciale pour batterie au lithium selon la revendication 1, dans lequel une marche est prévue au sommet de la batterie au lithium (200), et la surface de marche basse de la batterie au lithium (200) correspond à la position de la partie concave de la plaque de séparation (101).

4. Chariot élévateur à mât rétractable avec une structure spéciale pour batterie au lithium selon la revendication 2 ou 3, dans lequel un faisceau de câbles est prévu sur un côté de la surface de marche basse de la batterie au lithium (200) à l'écart de la surface de marche haute de la batterie au lithium ; dans lequel le compartiment de batterie est doté d'un espace pour le faisceau de câbles dans lequel le faisceau de câbles est placé.

5. Chariot élévateur à mât rétractable avec une structure spéciale pour batterie au lithium selon l'une quelconque des revendications précédentes, dans lequel le châssis (100) comprend en outre un panneau arrière (106) situé sur un côté arrière de la plaque inférieure (103), dans lequel le panneau arrière (106) comprend un corps de panneau (106-1), une plaque principale (106-2) et un déflecteur de volant (106-3), dans lequel le corps de panneau (106-1), la plaque principale (106-2) et le déflecteur de volant (106-3) sont tous des plaques de contrepoids solides.

6. Chariot élévateur à mât rétractable avec une structure spéciale pour batterie au lithium selon la revendication 5, dans lequel le nombre de déflecteurs de volant (106-3) est d'au moins deux, et les déflecteurs sont en forme d'arc ; dans lequel tous les déflecteurs de volant (106-3) forment ensemble une structure annulaire.

7. Chariot élévateur à mât rétractable avec une structure spéciale pour batterie au lithium selon la revendication 5 ou 6, dans lequel le châssis (100) comprend en outre une partie jambe gauche (105) et une partie jambe droite (104), et le panneau arrière (106) est relié entre la partie jambe gauche (105) et la partie jambe droite (104) ; dans lequel la partie jambe gauche (105) est une jambe gauche lestée avec une structure solide, et la partie jambe droite (104) est une jambe droite lestée avec une structure solide.

8. Chariot élévateur à mât rétractable avec une structure spéciale pour batterie au lithium selon l'une quelconque des revendications précédentes, dans lequel un tuyau d'huile (601) est prévu sur un côté du panneau de fixation de tuyau d'huile.
